(19) Europäisches Patentamt / European Patent Office / Office européen des brevets

(11) **EP 1 583 306 B1**

(12) **FASCICULE DE BREVET EUROPEEN**

(45) Date de publication et mention
de la délivrance du brevet:
**07.05.2014 Bulletin 2014/19**

(51) Int Cl.:
***H04L 25/02*** *(2006.01)*   ***H04L 27/26*** *(2006.01)*

(21) Numéro de dépôt: **05101840.6**

(22) Date de dépôt: **09.03.2005**

(54) **Démodulateur COFDM**

Mehrträgerempfänger mit Einschätzung der Zeitvarianz des Kanals

Multicarrier receiver with estimation of channel time variance

(84) Etats contractants désignés:
**DE FR**

(30) Priorité: **10.03.2004 FR 0450484**

(43) Date de publication de la demande:
**05.10.2005 Bulletin 2005/40**

(73) Titulaire: **STMICROELECTRONICS S.A.**
**92120 Montrouge (FR)**

(72) Inventeur: **Alcouffe, Nicole**
**38000 Grenoble (FR)**

(74) Mandataire: **de Beaumont, Michel et al**
**1bis, rue Champollion**
**38000 Grenoble (FR)**

(56) Documents cités:
**EP-A- 1 276 288      WO-A1-03/088538**
**US-A1- 2002 146 078      US-B1- 6 452 917**

• **HYUK JUN OH, CIOFFI: "An adaptive channel**
**estimation scheme for DS-CDMA systems", IEEE**
**VEHICULAR TECHNOLOGY CONFERENCE, vol.**
**6, 24 septembre 2000 (2000-09-24), pages**
**2839-2843, XP010525099, NEW YORK, US**

EP 1 583 306 B1

**Description**

La présente invention concerne un démodulateur dit COFDM ("Coded Orthogonal Frequency Division Multiplex" ou multiplexage par division de fréquences orthogonales codées).

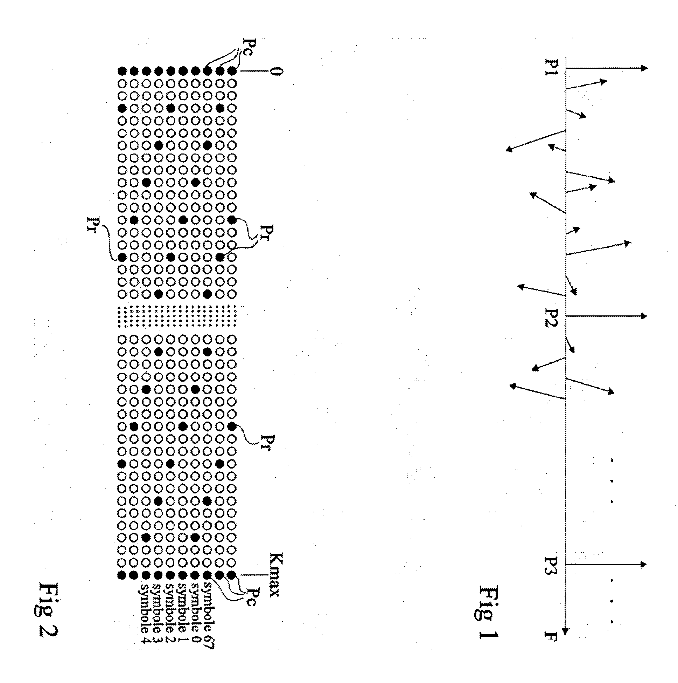

La figure 1 est destinée à illustrer le principe d'une modulation COFDM. Des paquets de données à émettre sont mis sous la forme de N coefficients complexes associés à N fréquences (ou porteuses) respectives. Le nombre N des fréquences est égal par exemple à 1705 pour le mode dit "2K" et à 6817 pour le mode dit "8K", en transmission hertzienne de télévision numérique. Chaque coefficient complexe correspond à un vecteur qui est illustré en figure 1 comme partant d'un axe des fréquences en un point indiquant la fréquence associée au coefficient.

L'ensemble de ces N coefficients est traité par transformée de Fourier rapide inverse (IFFT), ce qui produit un "symbole" constitué d'une somme de porteuses modulées, chaque porteuse ayant une amplitude et une phase déterminées par le coefficient complexe associé. Le symbole ainsi généré est émis.

De manière classique, en transmission hertzienne, la largeur du canal d'émission est de 6, 7 ou 8 MHz et chaque porteuse est séparée de la suivante par un écart de fréquence $\Delta f = 1/Tu$. Tu est la durée d'émission d'un symbole et est appelée durée utile. La durée utile est de l'ordre de 224 $\mu$s en mode 2K et 896 $\mu$s en mode 8K, pour une bande passante de 8 MHz.

A la réception, un récepteur fait subir au symbole le traitement inverse, c'est-à-dire principalement une transformée de Fourier rapide (FFT) pour reconstituer les coefficients complexes de départ.

Le récepteur reçoit en fait le signal émis par l'émetteur ainsi qu'une multitude de signaux atténués et retardés provenant de différents échos. Le canal de transmission, emprunté par le signal à démoduler, est alors dit à trajets multiples. Un tel canal a une réponse fréquentielle qui n'est pas plate, mais comporte des creux et des bosses dus aux échos et réflexions entre l'émetteur et le récepteur. Le canal est dit de type fixe lorsqu'il a une réponse fréquentielle sensiblement constante dans le temps. Inversement, le canal est dit de type variable dans le temps lorsqu'il a une réponse fréquentielle qui évolue dans le temps.

Pour déterminer une estimation de la réponse fréquentielle du canal de transmission, on utilise certains vecteurs P1, P2, P3... régulièrement répartis qui ont une valeur constante connue. Ces vecteurs, ou les porteuses correspondantes, sont appelés pilotes. Ils servent à refléter les distorsions subies par le signal transmis et, par l'information qu'ils donnent sur la réponse du canal, ils permettent de corriger les vecteurs inconnus situés entre les pilotes.

La figure 2 représente schématiquement la place de pilotes dans les symboles. Les symboles sont groupés en trames de 68 symboles, de façon classique en transmission hertzienne de télévision numérique (norme ETSI EN 300 744, V1.4.1).

En figure 2, chaque ligne représente un symbole et chaque case représente la position d'une porteuse. Les porteuses sont définies comme allant d'une position 0 à une position Kmax, Kmax étant égal à 1704 en mode 2K et 6816 en mode 8K. En effet, seule une partie des fréquences possibles est utilisée, notamment par suite de risque de pertes en bordure de canal. Les pilotes sont de deux types.

D'une part, il y a, dans chaque symbole, des pilotes continus Pc. Les pilotes continus correspondent à des fréquences particulières réparties dans le canal. Dans la norme ETSI évoquée ci-dessus, il y en a 45 en mode 2K et 177 en mode 8K. Les pilotes continus sont présents dans tous les symboles et occupent toujours la même position en fréquence. En figure 2, seuls les pilotes continus correspondants aux positions 0 et Kmax ont été représentés.

D'autre part, il y a, dans chaque symbole, des pilotes Pr dits "répartis" ("scattered pilots" en anglais), qui sont disposés toutes les 12 porteuses, et décalés de trois positions entre deux symboles successifs. Ainsi, tous les quatre symboles, on retrouve la même disposition des pilotes répartis Pr.

Les pilotes continus et répartis, d'amplitude constante à l'émission, sont utilisés pour connaître la réponse fréquentielle et impulsionnelle du canal. Pour ce faire, au récepteur, le signal reçu complexe, temporel, après avoir été mis en bande de base, est fourni à un transformateur de Fourier rapide fournissant le symbole dans le domaine fréquentiel. Les pilotes sont prélevés de ce symbole. Une estimation de la réponse fréquentielle du canal est déterminée à partir des pilotes continus et répartis prélevés sur quatre symboles successifs. L'estimation de la réponse fréquentielle est notamment utilisée pour corriger les vecteurs associés aux porteuses situées entre les pilotes. La réponse impulsionnelle du canal, obtenue à partir de la transformée de Fourier inverse de l'estimation de la réponse fréquentielle, est notamment utilisée pour positionner finement une fenêtre sur laquelle est réalisée la transformée de Fourier rapide.

De nombreux paramètres de fonctionnement du démodulateur COFDM sont généralement optimisés lors du fonctionnement du COFDM pour améliorer les performances du démodulateur.

Un procédé pour ajuster les paramètres de fonctionnement du démodulateur consiste à analyser les données reçues après décodage complet et à déterminer leur taux d'erreur BER ("Bit Error Rate" en anglais). Les paramètres de fonctionnement du démodulateur décrits précédemment peuvent alors être modifiés par tâtonnements jusqu'à ce que le taux d'erreur soit acceptable.

Un autre critère de mesure de la qualité de la démodulation correspond au rapport signal sur bruit SNR ("Signal Noise Ratio" en anglais) qui peut être déterminé lors de l'extraction des pilotes continus ou répartis.

Parmi les paramètres de fonctionnement du démodulateur pouvant être optimisés, certains dépendent du type fixe ou variable dans le temps du canal. Par exemple, selon la nature du canal, un procédé particulier peut être privilégié pour déterminer la réponse fréquentielle du canal permettant ainsi d'obtenir plus efficacement une estimation précise de la réponse fréquentielle du canal. En outre, en fonction du type du canal, on peut fixer de façon adaptée les gains d'amplificateurs prévus en entrée du démodulateur pour amplifier le signal reçu par le démodulateur. De plus, avant la réalisation de la transformée de Fourier rapide, le signal complexe est généralement corrigé fréquentiellement et temporellement par des algorithmes mettant en oeuvre des constantes de temps qui peuvent être ajustées en fonction du type du canal.

Toutefois, le procédé d'optimisation des paramètres de fonctionnement du démodulateur utilisant le taux d'erreur BER est relativement imprécis et lent en ce qui concerne les paramètres de fonctionnement pouvant être optimisés en fonction du type du canal de transmission. En effet, il faut attendre le décodage complet des données, ce qui peut être très long. Une modification des paramètres de fonctionnement du démodulateur à partir d'un tel critère est donc réalisée bien après une évolution du canal, et donc généralement trop tard pour éviter une perte de données. En outre, le taux d'erreur BER n'indique pas de quelle façon doivent être modifiés les paramètres de fonctionnement du démodulateur pour en améliorer les performances. En effet, un ajustement correct des paramètres de fonctionnement du démodulateur ne sera constaté que par une diminution ultérieure du taux d'erreur.

Comme pour le taux d'erreur BER, il n'est pas possible de déduire du rapport signal sur bruit SNR les raisons de la dégradation de la démodulation. Un procédé d'optimisation de paramètre mettant en oeuvre le rapport signal sur bruit SNR est donc lent et imprécis puisque les paramètres de fonctionnement du démodulateur doivent donc être modifiés par tâtonnements jusqu'à ce que le rapport signal sur bruit soit acceptable.

Les documents WO 03/088538 et US 6 452 917 décrivent des procédés d'estimation des caractéristiques du canal de transmission.

La présente invention vise un procédé et un circuit, pour démodulateur COFDM, fournissant un indicateur permettant d'ajuster rapidement et précisément les paramètres de fonctionnement du démodulateur pouvant être optimisés selon le type fixe ou variable dans le temps du canal de transmission.

Selon un autre objet de l'invention, la présente invention vise un procédé et un circuit fournissant un indicateur représentatif de la façon dont doivent être ajustés les paramètres de fonctionnement du démodulateur pouvant être optimisés selon le type fixe ou variable dans le temps du canal de transmission.

Dans ce but, la présente invention prévoit un démodulateur COFDM comprenant un circuit de transformée de Fourier rapide recevant un signal par un canal de transmission, le signal reçu correspondant à une suite de symboles véhiculant chacun plusieurs porteuses dont certaines sont des pilotes, chaque porteuse d'un symbole étant modulée en phase et/ou en amplitude par un coefficient complexe courant, ledit circuit de transformée de Fourier rapide fournissant pour chaque porteuse le coefficient complexe courant associé ; un circuit de détermination d'une estimation de la réponse fréquentielle du canal de transmission fournissant, pour chaque pilote, un coefficient complexe estimé à partir du coefficient complexe courant associé au pilote ; et un circuit de quantification de la variation temporelle de la réponse fréquentielle du canal de transmission à partir des nombres complexes estimé et courant associés à au moins un pilote.

Selon la présente invention, le circuit de détermination de l'estimation de la réponse fréquentielle comprend un circuit pour fournir, pour chaque pilote d'un symbole, un coefficient complexe différentiel obtenu à partir de la différence entre les coefficients complexes courant et estimé associés au pilote.

Selon la présente invention, le circuit de quantification de la variation temporelle de la réponse fréquentielle du canal de transmission comprend un circuit pour fournir une première valeur représentative du module du coefficient complexe estimé associé au pilote ; un circuit pour fournir une seconde valeur représentative du module du coefficient complexe différentiel associé au pilote ; et un circuit pour fournir un indicateur instantané de la variation temporelle de la réponse fréquentielle du canal de transmission pour le pilote, correspondant au rapport entre la seconde valeur et la première valeur.

Selon un mode de réalisation de la présente invention, le circuit de quantification de la variation temporelle de la réponse fréquentielle du canal de transmission comprend un circuit pour déterminer la somme des indicateurs instantanés pour tous les pilotes d'un symbole.

Selon un mode de réalisation de la présente invention, le circuit de quantification de la variation temporelle de la réponse fréquentielle du canal de transmission comprend un circuit pour déterminer un indicateur moyen égal à la moyenne temporelle de la somme des indicateurs instantanés.

Selon un mode de réalisation de la présente invention, le démodulateur comprend un circuit de correction recevant l'indicateur moyen et modifiant un paramètre de fonctionnement du démodulateur en fonction de l'indicateur moyen.

La présente invention prévoit également un procédé de démodulation de type COFDM comprenant une étape de transformation de Fourier rapide d'un signal reçu depuis un canal de transmission, le signal reçu correspondant à une suite de symboles véhiculant chacun plusieurs porteuses dont certaines sont des pilotes, chaque porteuse d'un symbole étant modulée en phase et/ou en amplitude par un coefficient complexe courant ; une étape de détermination d'une estimation de la réponse fréquentielle du canal de transmission à partir des coefficients complexes courants associés aux pilotes ; et une étape de quantification de la variation temporelle de la réponse fréquentielle du canal de transmission consistant à fournir, pour chaque pilote, un coefficient complexe associé au pilote à partir du coefficient complexe estimé associé à au moins un pilote et du coefficient complexe courant associé au pilote.

Selon la présente invention, l'étape de quantification de la variation temporelle de la réponse fréquentielle du canal de transmission comprend les étapes consistant à fournir une première valeur représentative du module du coefficient complexe estimé associé au pilote ; à fournir une seconde valeur représentative du module d'un coefficient complexe différentiel obtenu à partir de la différence entre les coefficients complexes courant et estimé associés au pilote ; et à fournir un indicateur instantané de la variation temporelle de la réponse fréquentielle du canal de transmission pour le pilote, correspondant au rapport entre la seconde valeur et la première valeur.

Selon un mode de réalisation de la présente invention, l'étape de quantification de la variation temporelle de la réponse fréquentielle du canal de transmission comprend la détermination de la somme des indicateurs instantanés pour tous les pilotes d'un symbole.

Selon un mode de réalisation de la présente invention, l'étape de quantification de la variation temporelle de la réponse fréquentielle du canal de transmission comprend la détermination de la moyenne temporelle de la somme des indicateurs instantanés.

Ces objets, caractéristiques et avantages, ainsi que d'autres de la présente invention seront exposés en détail dans la description suivante d'un exemple de réalisation particulier faite à titre non-limitatif en relation avec les figures jointes parmi lesquelles :

　　　la figure 1, précédemment décrite, représente des porteuses en phase et en amplitude dans un système de transmission COFDM ;
　　　la figure 2, précédemment décrite, représente schématiquement la position de pilotes dans des symboles ;
　　　la figure 3 représente un exemple de réalisation d'un démodulateur selon la présente invention ;
　　　la figure 4 représente un exemple de réalisation d'une partie d'un module d'estimation de la réponse fréquentielle d'un canal de transmission selon l'invention ; et
　　　la figure 5 représente un exemple de réalisation d'un module de détermination du type, fixe ou variable dans le temps, du canal.

La présente invention vise à fournir, de façon quasi-instantanée, un indicateur représentatif du type fixe ou variable dans le temps du canal de transmission. Ceci permet d'obtenir une démodulation de bonne qualité puisque les ajustements des paramètres de fonctionnement du démodulateur qui dépendent du type du canal de transmission peuvent alors être réalisés très rapidement.

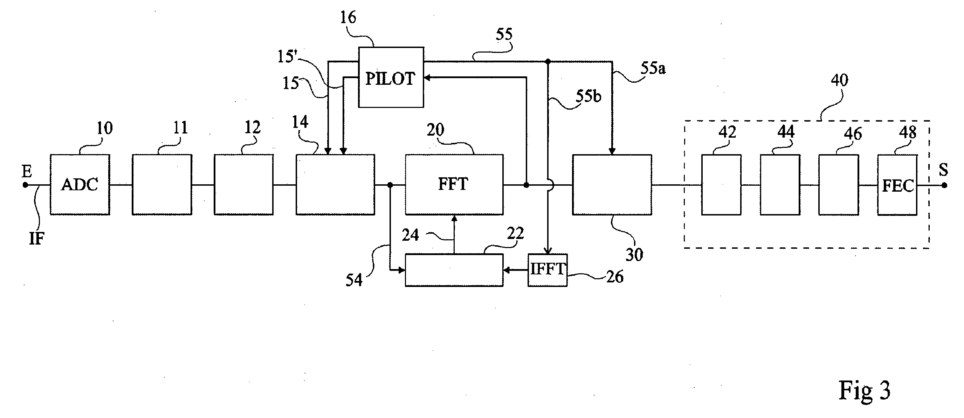

La figure 3 représente un exemple de démodulateur selon la présente invention. Le signal reçu comprend notamment des pilotes continus, des pilotes répartis, et des porteuses de données.

En figure 3, une entrée E du démodulateur reçoit un signal IF de fréquence intermédiaire permettant un échantillonnage, par exemple à 36 MHz. Le signal IF correspond au signal reçu après divers changements ou transpositions de fréquence.

L'entrée E est couplée à un convertisseur analogique-numérique 10 (ADC) qui numérise le signal d'entrée IF. Le convertisseur analogique-numérique 10 attaque un module 11 de suppression des interférences impulsionnelles. Le module 11 fournit un signal correspondant au signal fourni par le convertisseur analogique-numérique 10 dans lequel les interférences impulsionnelles ont été supprimées. Le module 11 attaque un module 12 de changement de fréquence. Le module 12 fournit un signal sensiblement en bande de base, le spectre du signal en sortie du module 12 étant centré sur une fréquence sensiblement égale à zéro. Le module 12 est couplé à un module 14 permettant d'une part un réglage fin de la fréquence centrale du spectre du signal et, d'autre part, de fournir des échantillons temporels à des instants appropriés au traitement ultérieur. En sortie du module 14, le spectre du signal est centré sur une fréquence égale à 0 et le nombre et la position temporelle des échantillons sont adaptés à la transformation par transformée de Fourier qui a lieu dans le module suivant. Le module 14 est commandé par des liaisons 15 et 15' reliant le module 14 à un module 16 de traitement des pilotes continus et repartis.

La sortie du module 14 attaque un module 20 de transformée de Fourier rapide (FFT) qui fournit les fréquences correspondant à un symbole. Le module 20 est piloté par un module 22 qui fournit, par l'intermédiaire d'une liaison 24, un signal de réglage de la fenêtre d'analyse de la transformée de Fourier.

La sortie du module 20 est couplée au module 16 qui réalise l'extraction et le traitement des pilotes continus et répartis. Le module 16 fournit sur les liaisons 15 et 15' les signaux destinés à corriger la fréquence centrale du spectre et la fréquence d'échantillonnage du signal.

La sortie du module 20 attaque un module 30 dans lequel le signal est corrigé à l'aide d'une estimation de la réponse fréquentielle du canal. L'estimation de la réponse fréquentielle du canal est réalisée dans le module 16 à l'aide des pilotes. Cette estimation est fournie par le module 16 sur une liaison 55, dont une branche 55a est couplée au module 30. En sortie du module 30, le signal comprend les porteuses corrigées véhiculant les données.

L'estimation de la réponse fréquentielle du canal, fournie par le module 16, alimente, par l'intermédiaire de la liaison 55 et d'une branche 55b de la liaison 55, un module 26 de transformée de Fourier inverse (IFFT), pour déterminer la réponse impulsionnelle du canal. Le module 26 fournit la réponse impulsionnelle du canal au module 22, pour ajuster dynamiquement le positionnement de la fenêtre d'analyse FFT.

Le traitement des porteuses véhiculant les données est assuré dans un circuit 40 de traitement et fourniture de données. Le circuit 40 a une structure classique et peut comporter, comme cela est représenté en figure 3, un module 42 de désentrelacement de symboles, un module 44 dit de "démappage", un module 46 de désentrelacement de bits, et un module 48 (FEC) de correction d'erreur. La sortie du module 48 constitue la sortie S du circuit 40 et du démodulateur et fournit des données correspondant aux données émises.

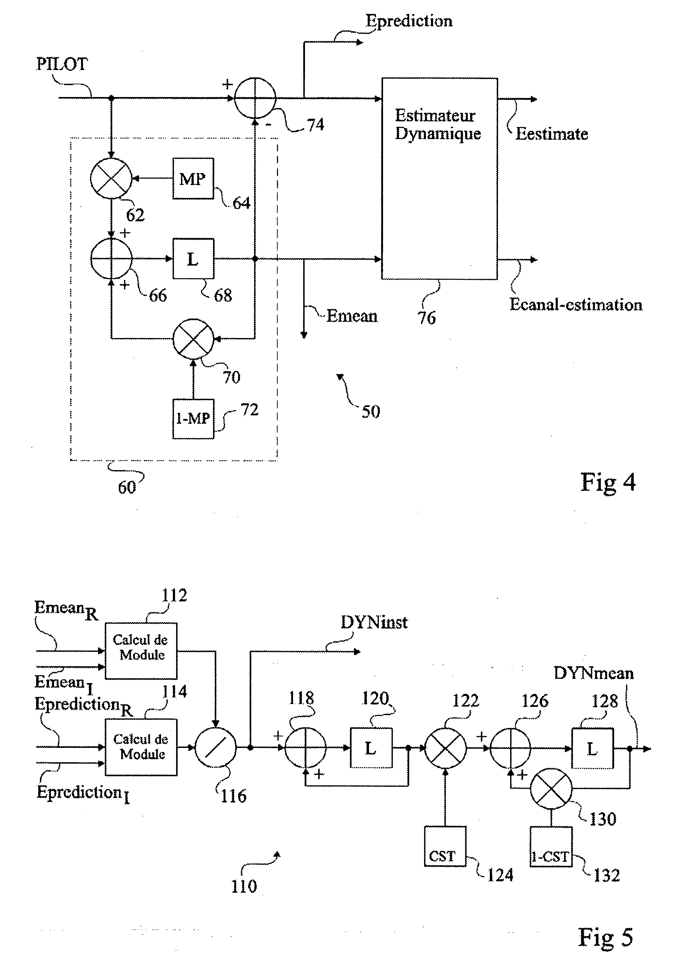

La figure 4 représente un exemple de réalisation plus détaillé d'un circuit 50 qui correspond à la partie du module 16 relative à la détermination de l'estimation de la réponse fréquentielle du canal. Le circuit 50 est utilisé dans le circuit intégré STV0360E, commercialisé par la demanderesse. Le circuit 50 est dupliqué pour chaque pilote, continu et réparti, contenu dans un symbole, et pour un pilote considéré, le circuit 50 est dupliqué pour la partie réelle et pour la partie imaginaire du coefficient complexe associé au pilote. Le fonctionnement des différents composants du circuit 50 est synchronisé par un signal d'horloge non représenté.

Le circuit 50 reçoit en entrée un signal PILOT correspondant à la partie réelle ou à la partie imaginaire du coefficient complexe associé à un pilote extrait par une autre partie du module 16 non représentée. Le circuit 50 comprend un circuit 60, également appelé estimateur statique, qui détermine par exemple la moyenne temporelle du signal PILOT. A titre d'exemple, le signal PILOT est un signal numérique codé sur huit bits signés. Le circuit 60 comprend un module de multiplication 62 recevant le signal PILOT et le contenu d'une mémoire 64 dans laquelle est stocké un gain MP. Le module de multiplication 62 fournit le signal PILOT multiplié par le gain MP à une première entrée d'un additionneur 66. Le signal de sortie de l'additionneur 66 est stocké dans une bascule (L) 68. Un module de multiplication 70 multiplie le contenu de la bascule 68 par un gain 1-MP stocké dans une mémoire 72. Le module de multiplication 70 attaque une seconde entrée de l'additionneur 66. La bascule 68 fournit un signal Emean correspondant à la moyenne temporelle du signal PILOT. Les gains MP et 1-MP jouent le rôle de constantes de temps pour la détermination du signal Emean. A titre d'exemple, MP est égal à 4/16. Le circuit 60 peut être désactivé en fixant MP à 1.

Le circuit 50 comprend un soustracteur 74 recevant le signal PILOT et le signal Emean et fournissant un signal Eprediction correspondant à la différence entre le signal PILOT et le signal Emean, et donc à la différence entre la dernière valeur du signal PILOT fournie au circuit 50 et la valeur moyenne du signal PILOT.

Le circuit 50 comprend un circuit 76 classique de correction du signal Eprediction, appelé également estimateur dynamique. Le circuit 76 est par exemple du type prédicteur ou interpolateur. Le circuit 76 reçoit le signal Emean et le signal Eprediction et fournit un signal Eestimate qui correspond à une estimation du signal Eprediction et un signal Ecanal-estimation qui correspond à la somme du signal Emean et du signal Eestimate. Le signal Ecanal-estimation correspond donc à une estimation du signal PILOT.

La figure 5 représente un exemple de réalisation du module 110 de détermination du type fixe ou variable dans le temps du canal de transmission. Pour ce faire, le module 110 détermine un indicateur représentatif du type fixe ou variable dans le temps du canal. Toute variation de l'indicateur traduit une évolution temporelle des caractéristiques du canal. Pour chaque symbole successif, et dans un symbole, pour chaque pilote continu et réparti, le module 110 reçoit des signaux $Emean_R$ et $Emean_I$ qui correspondent au signal Emean obtenu respectivement à partir de la partie réelle et de la partie imaginaire du coefficient complexe associé au pilote considéré, et des signaux $Eprediction_R$ et $Eprediction_I$ qui correspondent au signal Eprediction obtenu respectivement à partir de la partie réelle et de la partie imaginaire du coefficient complexe associé au pilote considéré. Les signaux $Emean_R$ et $Eprediction_R$ sont fournis par un même circuit 50 et les signaux $Emean_I$ et $Eprediction_I$ sont fournis par un même circuit 50. Les signaux $Emean_R$ et $Emean_I$ attaquent un circuit 114 de détermination du module du nombre complexe Em de partie réelle $Emean_R$ et de partie imaginaire $Emean_I$. De façon analogue, les signaux $Eprediction_R$ et $Eprediction_I$ attaquent un circuit 114 de détermination du module du nombre complexe Ep de partie réelle $Eprediction_R$ et de partie imaginaire $Eprediction_I$. La détermination d'un module nécessitant la réalisation d'opérations de multiplication, il peut être souhaitable d'utiliser une valeur approchée du module d'un nombre complexe z, de partie réelle a et de partie imaginaire b, donnée par la relation suivante :

$$\texttt{module(z)} = \texttt{(dmax+3/8*dmin),}$$

avec

dmin=min (abs(a), abs(b)) et dmax=max (abs(a), abs(b))

où abs correspond à la fonction valeur absolue, min correspond à la fonction minimum et max correspond à la fonction maximum. Il est clair que le module du nombre complexe Ep pourrait être déterminé selon n'importe quelle technique connue de l'homme du métier.

Le module 110 comprend un module de division 116 relié aux circuits 112, 114 et fournissant un signal DYNinst correspondant au rapport des modules de Ep et de Em. Le signal DYNinst correspond à un indicateur instantané représentatif d'une variation temporelle de la réponse fréquentielle du canal pour le pilote considéré. Etant donné que l'on réalise une division au niveau du module 116, il est souhaitable de prévoir que le circuit 112 fixe le module du nombre complexe Em à une constante minimale non nulle, lorsque le module est inférieur à un seuil déterminé.

La sortie du module 116 attaque une première entrée d'un additionneur 118 fournissant un signal stocké dans une bascule 120. Une seconde entrée de l'additionneur 118 est reliée à la sortie de la bascule 120. Lorsque les signaux Emean$_R$, Emean$_I$, Eprediction$_R$, Eprediction$_I$ associés aux pilotes continus et répartis d'un symbole ont été successivement transmis au module 116, le signal fourni par la bascule 120 est égal à la somme des indicateurs instantanés associés aux pilotes continus et répartis d'un symbole. La bascule 120 attaque un module de multiplication 122 adapté à multiplier le signal fourni par la bascule 120 par un gain CST stocké dans une mémoire 124. Un additionneur 126 reçoit à une première entrée le signal fourni par le module de multiplication 122 et fournit un signal stocké dans une bascule 128. La bascule 128 fournit un signal DYNmean, correspondant à un indicateur moyenné qui est transmis à un module de multiplication 130 multipliant le signal DYNmean par un gain 1-CST stocké dans une mémoire 132, le résultat de la multiplication étant fourni à une seconde entrée de l'additionneur 126. Le signal DYNmean correspond donc à la moyenne temporelle de la somme des indicateurs instantanés. Les gains CST et 1-CST correspondent aux constantes de temps utilisées pour déterminer la moyenne temporelle de la somme des indicateurs instantanés. A titre d'exemple, le gain CST est égal à 1/16.

Le signal DYNmean étant codé sur un nombre limité de bits, il peut être nécessaire de multiplier le signal DYNmean par un facteur d'échelle, qui peut dépendre du type de démodulation utilisé (démodulation "2K" ou "8K"), notamment pour obtenir une valeur numérique facilement interprétable.

Plus l'indicateur instantané DYNinst associé à un pilote est élevé, plus la réponse fréquentielle du canal varie dans le temps par rapport au pilote considéré. Inversement, plus l'indicateur instantané DYNinst associé à un pilote est faible, plus la réponse fréquentielle du canal est constante dans le temps par rapport au pilote considéré.

Plus l'indicateur moyenné DYNmean est élevé, plus la réponse fréquentielle du canal est globalement variable dans le temps. Inversement, plus l'indicateur moyenné DYNmean est faible, plus la réponse fréquentielle du canal est globalement constante dans le temps.

Les valeurs des indicateurs instantanés et moyenné peuvent être fournis à différents composants du démodulateur pour modifier des paramètres de fonctionnement du démodulateur. Par exemple, selon les valeurs des indicateurs instantanés et/ou de l'indicateur moyenné, les valeurs des gains MP et des coefficients utilisés dans le circuit 76 peuvent être modifiés pour privilégier une estimation de la réponse fréquentielle du canal pour les pilotes continus ou répartis par l'intermédiaire du circuit 60 de détection de moyenne ou du circuit 76 de correction du module 16. Selon un autre exemple, les gains des amplificateurs prévus en amont du convertisseur analogique-numérique 10 peuvent être modifiés selon les valeurs des indicateurs instantanés et/ou de l'indicateur moyenné. Selon un autre exemple, les constantes de temps des algorithmes mis en oeuvre par le module 14 peuvent être ajustées en fonction des valeurs de l'indicateur de dynamisme instantané et/ou de l'indicateur moyenné.

Selon une variante de la présente invention, le module 110 de détermination du type fixe ou variable dans le temps du canal de transmission reçoit le signal Eestimate à la place du signal Eprediction. Le signal Eestimate est alors utilisé à la place du signal Eprediction dans le reste du module 110 qui est identique par ailleurs à ce qui a été décrit précédemment. En effet, le signal Eestimate qui correspond à une estimation du signal Eprediction a le même contenu informationnel que le signal Eprediction.

Bien entendu, la présente invention est susceptible de diverses variantes et modifications qui apparaîtront à l'homme de l'art. En particulier, le détail du traitement des pilotes continus et répartis n'est qu'un exemple non-limitatif, et il est à la portée de l'homme de l'art de modifier ce traitement de façon appropriée.

Aussi, dans l'exemple de démodulateur de la figure 5, tous les modules peuvent être modifiés ou remplacés par des éléments appropriés. Par exemple, l'entrée E du circuit peut recevoir directement un signal centré sur environ 4,5 MHz. Le convertisseur analogique-numérique peut être extérieur au démodulateur.

La présente invention a principalement été décrite dans le cadre de la transmission hertzienne de télévision numérique, définie par la norme ETSI EN 300 744, V1.4.1. Cependant, la présente invention n'est ni limitée à cette norme ni à ce domaine et peut être appliquée dans et à tout appareil comportant un démodulateur COFDM, récepteur de télévision ou non. Par exemple, le démodulateur selon la présente invention peut être utilisé dans un téléphone portable.

**Revendications**

1. Démodulateur COFDM comprenant :

un circuit (20) de transformée de Fourier rapide recevant un signal par un canal de transmission, le signal reçu correspondant à une suite de symboles véhiculant chacun plusieurs porteuses dont certaines sont des pilotes, chaque porteuse d'un symbole étant modulée en phase et/ou en amplitude par un coefficient complexe courant, ledit circuit de transformée de Fourier rapide fournissant pour chaque porteuse le coefficient complexe courant associé ;

un circuit (50) de détermination d'une estimation de la réponse fréquentielle du canal de transmission fournissant, pour chaque pilote, un coefficient complexe estimé correspondant à la moyenne temporelle du coefficient complexe courant associé au pilote ; et

un circuit (110) de quantification de la variation temporelle de la réponse fréquentielle du canal de transmission à partir des coefficients complexes estimé et courant associés à au moins un pilote,

dans lequel le circuit (50) de détermination de l'estimation de la réponse fréquentielle comprend un circuit (60, 74) pour fournir, pour chaque pilote d'un symbole, un coefficient complexe différentiel obtenu à partir de la différence entre les coefficients complexes courant et estimé associés au pilote, et

dans lequel le circuit (110) de quantification de la variation temporelle de la réponse fréquentielle du canal de transmission comprend :

un circuit (112) pour fournir une première valeur représentative du module du coefficient complexe estimé associé au pilote ;

un circuit (114) pour fournir une seconde valeur représentative du module du coefficient complexe différentiel associé au pilote ; et

un circuit (116) pour fournir un indicateur instantané (DYNinst) de la variation temporelle de la réponse fréquentielle du canal de transmission pour le pilote, correspondant au rapport entre la seconde valeur et la première valeur.

2. Démodulateur selon la revendication 1, dans lequel le circuit (110) de quantification de la variation temporelle de la réponse fréquentielle du canal de transmission comprend un circuit (118, 120) pour déterminer la somme des indicateurs instantanés pour tous les pilotes d'un symbole.

3. Démodulateur selon la revendication 2, dans lequel le circuit (110) de quantification de la variation temporelle de la réponse fréquentielle du canal de transmission comprend un circuit (122, 124, 128, 130) pour déterminer un indicateur moyen égal à la moyenne temporelle (DYNmean) de la somme des indicateurs instantanés.

4. Démodulateur selon la revendication 3, comprenant un circuit de correction recevant l'indicateur moyen et modifiant un paramètre de fonctionnement du démodulateur en fonction de l'indicateur moyen.

5. Procédé de démodulation de type COFDM comprenant :

une étape de transformation de Fourier rapide d'un signal reçu depuis un canal de transmission, le signal reçu correspondant à une suite de symboles véhiculant chacun plusieurs porteuses dont certaines sont des pilotes, chaque porteuse d'un symbole étant modulée en phase et/ou en amplitude par un coefficient complexe courant ;

une étape de détermination d'une estimation de la réponse fréquentielle du canal de transmission fournissant, pour chaque pilote, un coefficient complexe estimé correspondant à la moyenne temporelle du coefficient complexe courant associé au pilote ; et

une étape de quantification de la variation temporelle de la réponse fréquentielle du canal de transmission consistant à fournir, pour chaque pilote, un coefficient complexe associé au pilote à partir du coefficient complexe estimé associé à au moins un pilote et au coefficient complexe courant associé au pilote,

dans lequel l'étape de quantification de la variation temporelle de la réponse fréquentielle du canal de transmission comprend les étapes suivantes :

fourniture d'une première valeur représentative du module du coefficient complexe estimé associé au pilote ;

fourniture d'une seconde valeur représentative du module d'un coefficient complexe différentiel obtenu à partir de la différence entre les coefficients complexes courant et estimé associés au pilote ; et

fourniture d'un indicateur instantané de la variation temporelle de la réponse fréquentielle du canal de transmission pour le pilote, correspondant au rapport entre la seconde valeur et la première valeur.

6. Procédé selon la revendication 5, dans lequel l'étape de quantification de la variation temporelle de la réponse fréquentielle du canal de transmission comprend la détermination de la somme des indicateurs instantanés pour tous les pilotes d'un symbole.

7. Procédé selon la revendication 6, dans lequel l'étape de quantification de la variation temporelle de la réponse fréquentielle du canal de transmission comprend la détermination de la moyenne temporelle de la somme des indicateurs instantanés.

**Patentansprüche**

1.  Ein COFDM-Demodulator, der Folgendes aufweist:

    eine Schaltung (20) zur schnellen Fourier-Transformation, die ein Signal auf einem Informationskanal empfängt, wobei das empfangene Signal einer Sequenz von Symbolen entspricht, von denen jedes mehrere Träger übermittelt, von denen einige Pilote sind, wobei jeder Träger eines Symbols in der Phase und/oder Amplitude durch einen aktuellen komplexen Koeffizienten bzw. Komplexkoeffizienten moduliert wird, wobei die Schaltung zur schnellen Fourier-Transformation für jeden Träger den assoziierten aktuellen Komplexkoeffizienten vorsieht;
    eine Schaltung (50) zum Bestimmen einer Schätzung der Frequenzantwort des Informationskanals, die für jeden Pilot einen geschätzten Komplexkoeffizienten entsprechend dem zeitlichen Durchschnitt des aktuellen Komplexkoeffizienten vorsieht, der mit dem Pilot assoziiert ist; und
    eine Schaltung (110) zum Quantisieren der zeitlichen Variation der Frequenzantwort des Informationskanals, basierend auf den geschätzten und aktuellen Komplexkoeffizienten, die mit dem wenigstens einen Pilot assoziiert sind,
    wobei die Schaltung (50) zum Bestimmen der Frequenzantwortschätzung eine Schaltung (60, 74) aufweist zum Vorsehen, für jeden Pilot eines Symbols, eines Differenzkomplexkoeffizienten, der basierend auf der Differenz zwischen den aktuellen und geschätzten Koeffizienten, die mit dem Pilot assoziiert sind, erlangt wird, und
    wobei die Schaltung (110) zum Quantisieren der zeitlichen Variation der Frequenzantwort des Informationskanals Folgendes aufweist:

    eine Schaltung (112) zum Vorsehen eines ersten Wertes, der repräsentativ ist für den Modul des geschätzten Komplexkoeffizienten, der mit dem Pilot assoziiert ist;
    eine Schaltung (114) zum Vorsehen eines zweiten Wertes, der repräsentativ ist für den Modul des Differenzkomplexkoeffizienten, der mit dem Pilot assoziiert ist; und
    eine Schaltung (116) zum Vorsehen eines unmittelbaren Indikators (DYNinst) der zeitlichen Variation der Frequenzantwort des Informationskanals für den Pilot, und zwar entsprechend dem Verhältnis zwischen dem zweiten Wert und dem ersten Wert.

2.  Demodulator nach Anspruch 1, wobei die Schaltung (110) zum Quantisieren der zeitlichen Variation der Frequenzantwort des Informationskanals eine Schaltung (118, 120) zum Bestimmen der Summe der unmittelbaren Indikatoren für alle Pilote eines Symbols aufweist.

3.  Demodulator nach Anspruch 2, wobei die Schaltung (110) zum Quantisieren der zeitlichen Variation der Frequenzantwort des Informationskanals eine Schaltung (122, 124, 128, 130) zum Bestimmen eines durchschnittlichen Indikators gleich dem zeitlichen Durchschnitt (DYNmean) der Summe der unmittelbaren Indikatoren aufweist.

4.  Demodulator nach Anspruch 3, der eine Korrekturschaltung aufweist, die den durchschnittlichen Indikator empfängt und einen Betriebsparameter des Demodulators gemäß dem durchschnittlichen Indikator modifiziert.

5.  Ein Demodulationsverfahren vom COFDM-Typ, das Folgendes aufweist:

    einen Schritt einer schnellen Fourier-Transformation eines Signals, das von einem Informationskanal empfangen wird, wobei das empfangene Signal einer Sequenz von Symbolen entspricht, von denen jedes mehrere Träger trägt, von denen einige Pilot sind, wobei jeder Träger eines Symbols in der Phase und/oder Amplitude durch einen aktuellen komplexen Koeffizienten bzw. Komplexkoeffizienten moduliert wird;
    einen Schritt des Bestimmens einer Schätzung der Frequenzantwort des Informationskanals, der für jeden Pilot einen geschätzten Komplexkoeffizienten entsprechend dem zeitlichen Durchschnitt des aktuellen Komplexkoeffizienten vorsieht, der mit dem Pilot assoziiert ist; und
    einen Schritt des Quantisierens der zeitlichen Variation der Frequenzantwort des Informationskanals, der daraus besteht, für jeden Pilot einen Komplexkoeffizienten vorzusehen, der mit dem Pilot assoziiert ist, und zwar basierend auf dem geschätzten Komplexkoeffizienten, der mit wenigstens einem Pilot assoziiert ist und dem aktuellen Komplexkoeffizienten, der mit dem Pilot assoziiert ist,
    wobei der Schritt des Quantisierens der zeitlichen Variation der Frequenzantwort des Informationskanals folgende Schritte aufweist:

    Vorsehen eines ersten Wertes, der repräsentativ ist für den Modul des geschätzten Komplexkoeffizienten, der mit dem Pilot assoziiert ist;
    Vorsehen eines zweiten Wertes, der repräsentativ ist für den Modul eines Differenzkomplexkoeffizienten, der aus der Differenz zwischen den aktuellen und geschätzten Komplexkoeffizienten, die mit dem Pilot assoziiert sind, erlangt wird; und

Vorsehen eines unmittelbaren Indikators der zeitlichen Variation der Frequenzantwort des Informationskanals für den Pilot, und zwar entsprechend dem Verhältnis zwischen dem zweiten Wert und dem ersten Wert.

6. Verfahren nach Anspruch 5, wobei der Schritt des Quantisierens der zeitlichen Variation der Frequenzantwort des Informationskanals die Bestimmung der Summe der unmittelbaren Indikatoren für alle Pilote eines Symbols aufweist.

7. Verfahren nach Anspruch 6, wobei der Schritt des Quantisierens der zeitlichen Variation der Frequenzantwort des Informationskanals die Bestimmung des zeitlichen Durchschnitts der Summe der unmittelbaren Indikatoren aufweist.

**Claims**

1. A COFDM demodulator comprising:

a fast Fourier transform circuit (20) receiving a signal on an information channel, the received signal corresponding to a sequence of symbols, each conveying several carriers, some of which are pilots, each carrier of a symbol being modulated in phase and/or in amplitude by a current complex coefficient, said fast Fourier transform circuit providing for each carrier the associated current complex coefficient;
a circuit (50) for determining an estimate of the frequency response of the information channel providing, for each pilot, an estimated complex coefficient corresponding to the time average of the current complex coefficient associated with the pilot; and
a circuit (110) for quantizing the time variation of the frequency response of the information channel based on the estimated and current complex coefficients associated with at least one pilot,
wherein the circuit (50) for determining the frequency response estimate comprises a circuit (60, 74) for providing, for each pilot of a symbol, a differential complex coefficient obtained based on the difference between the current and estimated coefficients associated with the pilot, and
wherein the circuit (110) for quantizing the time variation of the frequency response of the information channel comprises:

a circuit (112) for providing a first value representative of the modulus of the estimated complex coefficient associated with the pilot;

a circuit (114) for providing a second value representative of the modulus of the differential complex coefficient associated with the pilot; and
a circuit (116) for providing an instantaneous indicator (DYNinst) of the time variation of the frequency response of the information channel for the pilot, corresponding to the ratio between the second value and the first value.

2. The demodulator of claim 1, wherein the circuit (110) for quantizing the time variation of the frequency response of the information channel comprises a circuit (118, 120) for determining the sum of the instantaneous indicators for all the pilots of a symbol.

3. The demodulator of claim 2, wherein the circuit (110) for quantizing the time variation of the frequency response of the information channel comprises a circuit (122, 124, 128, 130) for determining a mean indicator equal to the time average (DYNmean) of the sum of the instantaneous indicators.

4. The demodulator of claim 3, comprising a correction circuit receiving the mean indicator and modifying an operating parameter of the demodulator according to the mean indicator.

5. A COFDM-type demodulation method comprising:

a step of fast Fourier transformation of a signal received from an information channel, the received signal corresponding to a sequence of symbols each carrying several carriers, some of which are pilots, each carrier of a symbol being modulated in phase and/or in amplitude by a current complex coefficient;
a step of determining an estimate of the frequency response of the information channel providing, for each pilot, an estimated complex coefficient corresponding to the time average of the current complex coefficient associated with the pilot; and
a step of quantizing the time variation of the frequency response of the information channel, consisting of providing, for each pilot, a complex coefficient associated with the pilot based on the estimated complex coefficient associated with at least one pilot and on the current complex coefficient associated with the pilot,
wherein the step of quantizing the time variation of the frequency response of the information channel comprises the steps of:

providing a first value representative of the modulus of the estimated complex coefficient associated with the pilot;

providing a second value representative of the modulus of a differential complex coefficient obtained from the difference between the current and estimated complex coefficients associated with the pilot; and providing an instantaneous indicator of the time variation of the frequency response of the information channel for the pilot, corresponding to the ratio between the second value and the first value.

6. The method of claim 5, wherein the step of quantizing the time variation of the frequency response of the information channel comprises the determination of the sum of the instantaneous indicators for all the pilots of a symbol.

7. The method of claim 6, wherein the step of quantizing the time variation of the frequency response of the information channel comprises the determination of the time average of the sum of the instantaneous indicators.

Fig 1

Fig 2

Fig 3

PILOT

Eprediction

Estimateur
Dynamique

Eestimate

MP  64

62

L  68

66

1-MP  72

70

74

Emean

76

Ecanal-estimation

50

**Fig 4**

Emean$_R$

112

Calcul de
Module

Emean$_I$

Eprediction$_R$

114

Calcul de
Module

Eprediction$_I$

116

DYNinst

118  120  122  126  128

DYNmean

L  L

CST  124  1-CST  132

130

110

**Fig 5**

**EP 1 583 306 B1**

## RÉFÉRENCES CITÉES DANS LA DESCRIPTION

**Documents brevets cités dans la description**

- WO 03088538 A
- US 6452917 B